# EUROPEAN PATENT APPLICATION

(11) **EP 4 349 921 A1**
(43) Date of publication of application: **10.04.2024**
(21) Application number: 22815900.0
(22) Date of filing: 23.05.2022
(51) Int. Cl.: C08L 101/00, C08F 32/00, C08K 3/26, G02B 1/04

(54) **RESIN COMPOSITION AND OPTICAL ELEMENT**

(30) Priority: 31.05.2021 JP 2021091503
(71) Applicant: Zeon Corporation, Tokyo 100-8246 (JP)
(72) Inventor: SAWAGUCHI, Taichi, Tokyo 100-8246 (JP)
(74) Representative: Maiwald GmbH
(86) International application number: PCT/JP2022/021136
(87) International publication number: WO 2022/255150

(57) **Abstract**

Provided is a resin composition that suppresses the occurrence of shaping defects such as stringing while also being capable of forming an optical element having high transparency and low birefringence. The resin composition contains an alicyclic structure-containing polymer and strontium carbonate powder. The proportional content of the strontium carbonate powder in the resin composition is not less than 0.2 mass% and not more than 1.0 mass%.

## Description

### TECHNICAL FIELD

The present disclosure relates to a resin composition and an optical element.

### BACKGROUND

It is desirable for optical members to have excellent optical properties such as transparency and birefringence and excellent weatherability such as moisture resistance and heat resistance. Examples of materials used for such optical members include alicyclic structure-containing polymers such as cycloolefin polymers, polycarbonate, polyethylene terephthalate, and polyacrylate.

Various materials have been proposed in recent years with the aim of obtaining optical members having even better optical properties. For example, Patent Literature (PTL) 1 proposes using an optical resin containing alkaline earth metal carbonate fine powder in order to adjust the birefringence of an optical member such as a film that is used in a bent state. According to PTL 1, the alkaline earth metal carbonate fine powder can control birefringence of an optical member because the fine powder itself is a birefringent powder.

### CITATION LIST

### Patent Literature

PTL 1: JP2021-47402A

### SUMMARY

### (Technical Problem)

In the case of a resin composition that is used to form an optical element such as a lens, for example, it is desirable that the resin composition displays high transparency and low birefringence after being shaped to obtain an optical element.

It is also desirable for such a resin composition to be capable of suppressing the occurrence of shaping defects such as stringing since an optical element such as a lens may be formed through injection molding of the resin composition, for example.

Accordingly, an object of the present disclosure is to provide a resin composition that suppresses the occurrence of shaping defects such as stringing while also being capable of forming an optical element having high transparency and low birefringence and also to provide an optical element that is obtained through shaping of this resin composition.

### (Solution to Problem)

The inventor conducted diligent investigation with the aim of solving the problems set forth above. The inventor made a new discovery that in the case of a resin composition that contains an alicyclic structure-containing polymer and strontium carbonate powder and in which the proportional content of the strontium carbonate powder is within a specific range, this resin composition suppresses the occurrence of shaping defects such as stringing while also being capable of forming an optical element having high transparency and low birefringence. In this manner, the inventor completed the present disclosure.

Specifically, the present disclosure aims to advantageously solve the problems set forth above, and [1] a presently disclosed resin composition comprises an alicyclic structure-containing polymer and strontium carbonate powder, wherein proportional content of the strontium carbonate powder in the resin composition is not less than 0.2 mass% and not more than 1.0 mass%.

A resin composition such as set forth above suppresses the occurrence of shaping defects such as stringing while also being capable of forming an optical element having high transparency and low birefringence.

[2] In the resin composition according to the foregoing [1], the strontium carbonate powder preferably contains strontium carbonate nanoparticles and a surfactant attached to surfaces of the strontium carbonate nanoparticles.

When such a strontium carbonate powder is adopted, dispersibility of the strontium carbonate powder in the resin composition can be improved.

[3] The resin composition according to the foregoing [1] or [2] preferably has a melt flow rate of 40 g/10 min or more as measured in accordance with JIS K6719 with a temperature of 280°C and a load of 21.18 N.

By adopting a resin composition having a melt flow rate that is not less than the lower limit set forth above, birefringence of an obtained optical element can be further reduced. Moreover, by adopting a resin composition having a melt flow rate that is not less than the lower limit set forth above, the occurrence of shaping defects such as weld lines can be suppressed.

[4] In the resin composition according to any one of the foregoing [1] to [3], the strontium carbonate powder preferably has an aspect ratio (ratio of average major axis/average minor axis) of 1.1 or more.

When the aspect ratio of the strontium carbonate powder is not less than the lower limit set forth above, birefringence of an obtained optical element can be effectively suppressed.

Note that the average major axis and the average minor axis of strontium carbonate powder referred to in the present specification are measured by a method involving automated image processing of a scanning electron microscope photograph of the strontium carbonate powder.

[5] In the resin composition according to any one of the foregoing [1] to [4], the strontium carbonate powder preferably has an average diameter of not less than 10 nm and not more than 100 nm.

When the average diameter of the strontium carbonate powder is not less than the lower limit set forth above, reduction of transparency of an obtained optical element can be suppressed. On the other hand, when the average diameter of the strontium carbonate powder is not more than the upper limit set forth above, surface smoothness of an obtained optical element can be preserved.

[6] A presently disclosed optical element is obtained through shaping of the resin composition according to any one of the foregoing [1] to [5].

### (Advantageous Effect)

According to the present disclosure, it is possible to provide a resin composition that suppresses the occurrence of shaping defects such as stringing while also being capable of forming an optical element having high transparency and low birefringence and also to provide an optical element that is obtained through shaping of this resin composition.

### BRIEF DESCRIPTION OF THE DRAWINGS

In the accompanying drawings:

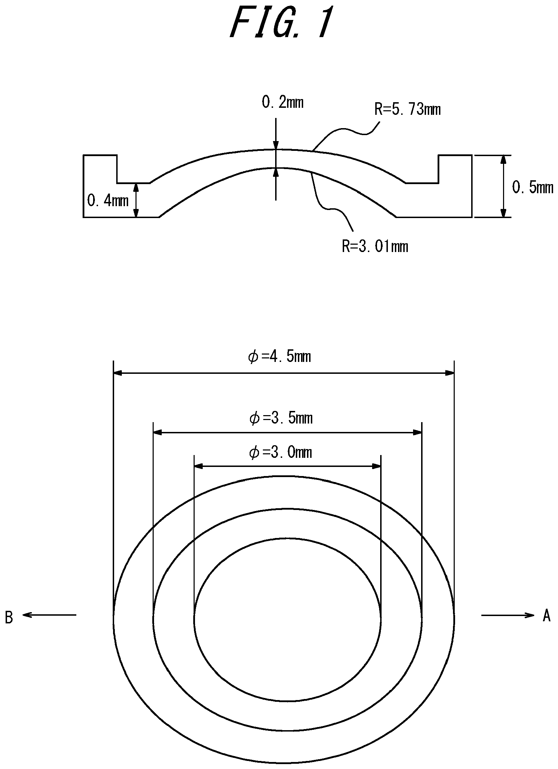

FIG. 1 is a schematic view illustrating an optical lens produced in examples.

### DETAILED DESCRIPTION

The following provides a detailed description of embodiments of the present disclosure.

### (Resin composition)

The presently disclosed resin composition contains an alicyclic structure-containing polymer and strontium carbonate powder and optionally further contains other compounding agents.

### <Alicyclic structure-containing polymer>

The term "alicyclic structure-containing polymer" as used in the present specification refers to a polymer and/or hydrogenated product thereof that is obtained through polymerization of one type of alicyclic structure-containing monomer or two or more types of alicyclic structure-containing monomers. In polymerization of an alicyclic structure-containing monomer to obtain the alicyclic structure-containing polymer, polymerization may be performed with respect to just an alicyclic structure-containing monomer, or copolymerization may be performed with respect to an alicyclic structure-containing monomer and another monomer that is not an alicyclic structure-containing monomer. In other words, the alicyclic structure-containing polymer referred to in the present specification includes a structural unit derived from an alicyclic structure-containing monomer and can optionally include a structural unit derived from another monomer that is not an alicyclic structure-containing monomer.

Specific examples of alicyclic structure-containing monomers include, but are not specifically limited to, alicyclic structure-containing monomers having one ring (monocyclic), two rings, three rings, four rings, or five or more rings and derivatives thereof having a substituent on a ring.

Examples of alicyclic structure-containing monomers having one ring (monocyclic alicyclic structure-containing monomers) include, but are not specifically limited to, cyclopentene, cyclohexene, cycloheptene, cyclooctene, cyclopentadiene, and 1,3-cyclohexadiene. The alicyclic structure-containing monomer having one ring may be a combination of two or more of these alicyclic structure-containing monomers.

Examples of alicyclic structure-containing monomers having two rings include, but are not specifically limited to, bicyclo[2.2.1]hept-2-ene (common name: norbornene; also abbreviated below as "NB"), 5-methyl-bicyclo[2.2.1]hept-2-ene, 5,5-dimethyl-bicyclo[2.2.1]hept-2-ene, 5-ethyl-bicyclo[2.2.1]hept-2-ene, 5-butyl-bicyclo[2.2.1]hept-2-ene, 5-ethylidene-bicyclo[2.2. 1]hept-2-ene, 5-hexyl-bicyclo[2.2.1]hept-2-ene, 5-octyl-bicyclo[2.2.1]hept-2-ene, 5-octadecyl-bicyclo[2.2.1]hept-2-ene, 5-methylidene-bicyclo[2.2.1]hept-2-ene, 5-vinyl-bicyclo[2.2.1]hept-2-ene, and 5-propenyl-bicyclo[2.2.1]hept-2-ene. The alicyclic structure-containing monomer having two rings may be a combination of two or more of these alicyclic structure-containing monomers. Of these examples, the alicyclic structure-containing monomer having two rings is preferably norbornene.

Examples of alicyclic structure-containing monomers having three rings include, but are not specifically limited to, tricyclo[5.2.1.0^{2,6}]deca-3,8-diene (common name: dicyclopentadiene; also abbreviated below as "DCP"), tricyclo[5.2.1.0^{2,6}]dec-3-ene, tricyclo[6.2.1.0^{2,7}]undeca-3,9-diene, tricyclo[6.2.1.0^{2,7}]undeca-4,9-diene, tricyclo[6.2.1.0^{2,7}]undec-9-ene, 5-cyclopentyl-bicyclo[2.2.1]hept-2-ene, 5-cyclohexyl-bicyclo[2.2.1]hept-2-ene, 5-cyclohexenyl-bicyclo[2.2.1]hept-2-ene, and 5-phenyl-bicyclo[2.2.1]hept-2-ene. The alicyclic structure-containing monomer having three rings may be a combination of two or more of these alicyclic structure-containing monomers.

Examples of alicyclic structure-containing monomers having four rings include, but are not specifically limited to, tetracyclo[6.2.1.1^{3,6}.0^{2,7}]dodec-4-ene (also referred to simply as "tetracyclododecene"; also abbreviated below as "TCD"), 9-methyltetracyclo[6.2.1.1^{3,6}.0^{2,7}]dodec-4-ene, 9-ethyltetracyclo[6.2.1.1^{3,6}.0^{2,7}]dodec-4-ene (also abbreviated below as "ETD"), 9-methylidenetetracyclo[6.2.1.1^{3,6}.0^{2,7}]dodec-4-ene, 9-ethylidenetetracyclo[6.2.1.1^{3,6}.0^{2,7}]dodec-4-ene, 9-vinyltetracyclo[6.2.1.1^{3,6}.0^{2,7}]dodec-4-ene, 9-propenyl-tetracyclo[6.2.1.1^{3,6}.0^{2,7}]dodec-4-ene, tetracyclo[9.2.1.0^{2,10}.0^{3,8}]tetradeca-3,5,7,12-tetraene (also referred to as 1,4-methano-1,4,4a,9a-tetrahydrofluorene; also abbreviated below as "MTF"), and tetracyclo[10.2.1.0^{2,11}.0^{4,9}]pentadeca-4,6,8,13-tetraene (also referred to as 1,4-methano-1,4,4a,9,9a,10-hexahydroanthracene). The alicyclic structure-containing monomer having four rings may be a combination of two or more of these alicyclic structure-containing monomers. Of these examples, the alicyclic structure-containing monomer having four rings is preferably one monomer or two or more monomers selected from the group consisting of tetracyclododecene and 1,4-methano-1,4,4a,9a-tetrahydrofluorene.

Examples of alicyclic structure-containing monomers having five or more rings include, but are not specifically limited to, (E)9-cyclopentyl-tetracyclo[6.2.1.1^{3,6}.0^{2,7}]dodec-4-ene, 9-cyclohexyl-tetracyclo[6.2.1.1^{3,6}.0^{2,7}]dodec-4-ene, 9-cyclohexenyl-tetracyclo[6.2.1.1^{3,6}.0^{2,7}]dodec-4-ene, pentacyclo[6.6.1.1^{3,6}.0^{2,7}.0^{9,14}]-4-hexadecene, pentacyclo[6.5.1.1^{3,6}.0^{2,7}.0^{9,13}]-4-pentadecene, pentacyclo[7.4.0.0^{2,7}.1^{3,6}.1^{10,13}]-4-pentadecene, 9-phenyl-cyclopentyl-tetracyclo[6.2.1.1^{3,6}.0^{2,7}]dodec-4-ene, heptacyclo[8.7.0.1^{2,9}.1^{4,7}.1^{11,17}.0^{3,8}.0^{12,16}]-5-eicosene and heptacyclo[8.7.0.1^{2,9}.0^{3,8}.1^{4,7}.0^{12,17}.1^{13,16}]-14-eicosene. The alicyclic structure-containing monomer having five or more rings may be a combination of two or more of these alicyclic structure-containing monomers.

In the aforementioned derivatives, the substituent included on a ring may be an alkyl group, an alkylene group, a vinyl group, an alkoxycarbonyl group, an alkylidene group, or the like, for example, without any specific limitations.

The other monomer that is not an alicyclic structure-containing monomer is not specifically limited so long as it is copolymerizable with the alicyclic structure-containing monomer and may, for example, be an α-olefin having a carbon number of 2 to 20 such as ethylene, propylene, 1-butene, 1-pentene, or 1-hexene or a derivative of any of these α-olefins; or a nonconjugated diene such as 1,4-hexadiene, 4-methyl-1,4-hexadiene, 5-methyl-1,4-hexadiene, or 1,7-octadiene. Of these examples, an α-olefin is preferable, and ethylene is particularly preferable.

In one embodiment, in a case in which an alicyclic structure-containing monomer and another monomer that is not an alicyclic structure-containing monomer are polymerized to obtain the alicyclic structure-containing polymer, a mass ratio of the used amount of the other monomer relative to the used amount of the alicyclic structure-containing monomer (other monomer/alicyclic structure-containing monomer) is preferably 30/70 or less, more preferably 20/80 or less, even more preferably 10/90 or less, and particularly preferably 1/99 or less from a viewpoint of transparency and birefringence.

The alicyclic structure-containing polymer is preferably a polymer of an alicyclic structure-containing monomer. In other words, the mass ratio of the used amount of another monomer relative to the used amount of an alicyclic structure-containing monomer (other monomer/alicyclic structure-containing monomer) is preferably 0/100.

In another embodiment, in a case in which an alicyclic structure-containing monomer and another monomer that is not an alicyclic structure-containing monomer are polymerized to obtain the alicyclic structure-containing polymer, a mass ratio of the used amount of the other monomer relative to the used amount of the alicyclic structure-containing monomer (other monomer/alicyclic structure-containing monomer) is preferably 1/99 or more, more preferably 3/97 or more, and even more preferably 5/95 or more, and is preferably 70/30 or less, more preferably 50/50 or less, and even more preferably 40/60 or less.

The alicyclic structure-containing polymer may be a polymer obtained by addition polymerization of an alicyclic structure-containing monomer (i.e., may be an alicyclic structure-containing addition polymer) or may be a polymer obtained through ring-opening polymerization of an alicyclic structure-containing monomer (i.e., may be an alicyclic structure-containing ring-opened polymer), for example. In particular, an alicyclic structure-containing ring-opened polymer is preferable due to having excellent mechanical strength.

Note that the alicyclic structure-containing ring-opened polymer can be obtained through polymerization of one type or two or more types of alicyclic structure-containing monomers having two or more rings.

The alicyclic structure-containing ring-opened polymer described above can be obtained, for example, by a method using a metathesis reaction catalyst (ring-opening polymerization catalyst) such as a ruthenium carbene complex catalyst described in WO2010/110323A1 or a method using a ring-opening polymerization catalyst such as a tungsten(phenylimide) tetrachloride tetrahydrofuran complex described in JP2015-54885A.

The alicyclic structure-containing addition polymer described above can be produced by a conventional and commonly known polymerization method such as a method using a catalyst system that is a combination of an addition polymerization catalyst such as a titanium compound, a zirconium compound, or a vanadium compound and a cocatalyst such as an organoaluminum compound, for example.

The alicyclic structure-containing polymer may be an alicyclic structure-containing addition polymer, an alicyclic structure-containing ring-opened polymer, or a hydrogenated product of either thereof, but a hydrogenated product (hereinafter, "hydrogenated alicyclic structure-containing polymer" is used as a collective term for a hydrogenated product of an alicyclic structure-containing addition polymer and a hydrogenated product of an alicyclic structure-containing ring-opened polymer) is preferable due to having excellent mechanical strength. The alicyclic structure-containing polymer is particularly preferably a hydrogenated alicyclic structure-containing ring-opened polymer obtained through hydrogenation of an alicyclic structure-containing ring-opened polymer.

The method by which the hydrogenated alicyclic structure-containing ring-opened polymer is produced through hydrogenation of the alicyclic structure-containing ring-opened polymer may, for example, be a method using a hydrogenation catalyst described in WO2010/110323A1. Moreover, it is possible to use a ruthenium carbene complex catalyst such as previously described as a ring-opening polymerization catalyst to produce an alicyclic structure-containing polymer and then to use the ruthenium carbene catalyst in that form as a hydrogenation catalyst in order to hydrogenate the alicyclic structure-containing ring-opened polymer and thereby produce a hydrogenated alicyclic structure-containing ring-opened polymer.

The percentage hydrogenation of the hydrogenated alicyclic structure-containing polymer is preferably 90% or more, more preferably 95% or more, and even more preferably 99% or more.

When the percentage hydrogenation of the hydrogenated alicyclic structure-containing polymer is not less than any of the lower limits set forth above, weatherability and heat resistance can be improved. The percentage hydrogenation of the hydrogenated alicyclic structure-containing polymer can be adjusted by altering conditions of the hydrogenation reaction, for example.

Note that the percentage hydrogenation of a hydrogenated alicyclic structure-containing polymer referred to in the present specification can be determined through ¹H-NMR measurement.

The glass-transition temperature (hereinafter, also abbreviated as "Tg") of the alicyclic structure-containing polymer differs depending on the type of polymer but is preferably 70°C or higher, more preferably 100°C or higher, and even more preferably 130°C or higher, and is preferably 300°C or lower, more preferably 250°C or lower, and even more preferably 200°C or lower.

When Tg of the alicyclic structure-containing polymer is not lower than any of the lower limits set forth above, an optical element having high heat resistance can be obtained. On the other hand, when Tg of the alicyclic structure-containing polymer is not higher than any of the upper limits set forth above, the shaping temperature of the resin composition can be restricted from becoming excessively high, and resin burning of the resin composition can be inhibited.

Note that Tg referred to in the present specification is measured in accordance with JIS K7121 under a condition of a heating rate of 10°C/min using a differential scanning calorimeter. A DSC6220 produced by SII NanoTechnology Inc. can be used as the differential scanning calorimeter.

The weight-average molecular weight (hereinafter, also abbreviated as "Mw") of the alicyclic structure-containing polymer is preferably 5,000 or more, more preferably 8,000 or more, and even more preferably 10,000 or more, and is preferably 40,000 or less, more preferably 35,000 or less, and even more preferably 30,000 or less.

When Mw of the alicyclic structure-containing polymer is not less than any of the lower limits set forth above, the resin composition has a suitably high viscosity, and formability of the resin composition can be improved. On the other hand, when Mw of the alicyclic structure-containing polymer is not more than any of the upper limits set forth above, the resin composition has a suitably low viscosity, residual stress in an obtained optical element can be reduced, and, as a result, birefringence of the optical element can be further reduced. In addition, the occurrence of shaping defects such as weld lines can be suppressed. Note that the term "weld line" as used in the present specification refers to a fine line that arises at a section where flows of molten resin converge and fuse inside a mold during resin shaping.

Note that Mw of an alicyclic structure-containing polymer referred to in the present specification is a polyisoprene-equivalent value (or a polystyrene-equivalent value in the case of a tetrahydrofuran solution) that is measured by gel permeation chromatography using a cyclohexane solution (or a tetrahydrofuran solution in a case in which the alicyclic structure-containing polymer does not dissolve).

The proportional content of the alicyclic structure-containing polymer in the resin composition is preferably 90.0 mass% or more, more preferably 95.0 mass% or more, even more preferably 99.0 mass% or more, further preferably 99.2 mass% or more, and particularly preferably 99.35 mass% or more, and is preferably 99.8 mass% or less, more preferably 99.7 mass% or less, and even more preferably 99.6 mass% or less.

### <Strontium carbonate powder>

The strontium carbonate powder is a powder that contains strontium carbonate. The strontium carbonate powder may contain supplemental components other than strontium carbonate such as a subsequently described surfactant. The proportional content of strontium carbonate in the strontium carbonate powder may be 30 mass% or more, and preferably 35 mass% or more, for example.

In one embodiment, the strontium carbonate powder is a powder that contains nanoparticles formed of strontium carbonate (hereinafter, also referred to as "strontium carbonate nanoparticles").

In the presently disclosed resin composition, the proportional content of the strontium carbonate powder among the resin composition is not less than 0.2 mass% and not more than 1.0 mass%. A resin composition such as set forth above suppresses the occurrence of shaping defects such as stringing while also being capable of forming an optical element having high transparency and low birefringence. The reason for this is thought to be as follows.

In shaping of a resin composition to obtain an optical element, it is desirable for the shaping to be performed at a comparatively high temperature in order to reduce residual stress and lower birefringence of the optical element. On the other hand, the adoption of a high shaping temperature reduces the viscosity of the resin composition and may lead to the occurrence of stringing during shaping of an optical element. When the proportional content of the strontium carbonate powder in the resin composition is 0.2 mass% or more, the resin composition can suppress the occurrence of stringing even with a high shaping temperature and can form an optical element having low birefringence. Moreover, since it is possible to adopt a high shaping temperature, the occurrence of weld lines can be suppressed when an optical element is obtained through shaping of the resin composition.

On the other hand, when the proportional content of the strontium carbonate powder in the resin composition is 1.0 mass% or less, the resin composition can suppress scattering of light due to the powder and can form an optical element having high transparency. Furthermore, given that strontium carbonate powder has an effect of suppressing birefringence, it is remarkable that an optical element having low birefringence can be formed when the proportional content of the strontium carbonate powder in the resin composition is 1.0 mass% or less. The reason for this is not necessarily clear, but the subsequently described examples and comparative examples clearly demonstrate that an optical element having low birefringence can be formed when the proportional content of strontium carbonate powder is 1.0 mass% or less.

The proportional content of the strontium carbonate powder in the resin composition is preferably 0.3 mass% or more, and more preferably 0.4 mass% or more, and is preferably 0.8 mass% or less, and more preferably 0.65 mass% or less.

The aspect ratio (ratio of average major axis/average minor axis) of the strontium carbonate powder is preferably 1.1 or more, more preferably 1.2 or more, and even more preferably 1.3 or more, and is preferably 5.0 or less, and more preferably 4.0 or less.

When the aspect ratio of the strontium carbonate powder is not less than any of the lower limits set forth above and not more than any of the upper limits set forth above, birefringence of an obtained optical element can be effectively suppressed.

The average diameter of the strontium carbonate powder is preferably 10 nm or more, and more preferably 15 nm or more, and is preferably 100 nm or less, and more preferably 75 nm or less.

When the average diameter of the strontium carbonate powder is not less than any of the lower limits set forth above, aggregation of particles can be inhibited, and reduction of transparency of an obtained optical element can be controlled. On the other hand, when the average diameter of the strontium carbonate powder is not more than any of the upper limits set forth above, surface smoothness of an obtained optical element can be preserved.

Note that the average major axis and the average minor axis of the strontium carbonate powder are measured by a method involving automated image processing of a scanning electron microscope (hereinafter, also abbreviated as "SEM") photograph of the strontium carbonate powder. The major axis of the strontium carbonate powder is measured as the longitudinal direction length (length of a long side) when the strontium carbonate powder is regarded as having a rectangular shape. Moreover, the minor axis of the strontium carbonate powder is measured as the transverse direction length (length of a short side) when the strontium carbonate powder is regarded as having a rectangular shape. Specifically, a rectangle of minimum area that circumscribes the strontium carbonate powder in the image is calculated, and then the major axis and the minor axis are determined from the lengths of a long side and a short side of this rectangle. The term "average" refers to an average value that is obtained by measuring the major axis and minor axis for a statistically reliable number (N number) of particles of the strontium carbonate powder, and this number is normally 100 or more, preferably 300 or more, and more preferably 500 or more.

The strontium carbonate powder preferably contains strontium carbonate nanoparticles and a surfactant attached to surfaces of the strontium carbonate nanoparticles. When such a strontium carbonate powder is adopted, dispersibility of the strontium carbonate powder in the resin composition can be improved.

The surfactant may be a compound that includes a hydrophilic group and a hydrophobic group and that further includes a group that forms an anion in water. This compound is preferably a compound in which the hydrophilic group is a polyoxyalkylene group, the hydrophobic group is bonded to one end of this polyoxyalkylene group, and the group that forms an anion in water is bonded to the other end of the polyoxyalkylene group. The hydrophobic group is preferably an alkyl group or an aryl group, and is more preferably a phenyl group. The group that forms an anion in water is preferably a carboxy group, a sulfate group, or a phosphate group.

The surfactant is preferably a phosphoric acid ester in which the group that forms an anion in water is a phosphate group. Since a phosphoric acid ester has high heat resistance compared to a carboxylic acid ester and a sulfuric acid ester, a resin composition in which strontium carbonate nanoparticles surface-treated with a phosphoric acid ester have been added has a low tendency to experience coloration due to thermal decomposition of the surfactant. The phosphoric acid ester may, for example, be a polyoxyethylene styrenated phenyl ether phosphoric acid ester or a polyoxyethylene alkyl ether phosphoric acid ester.

The content of the surfactant is preferably 1 part by mass or more, and more preferably 3 parts by mass or more relative to 100 parts by mass of the strontium carbonate nanoparticles, and is preferably 40 parts by mass or less, and more preferably 30 parts by mass or less relative to 100 parts by mass of the strontium carbonate nanoparticles.

When the content of the surfactant is not less than any of the lower limits set forth above, dispersibility of the strontium carbonate powder in the resin composition can be further improved. On the other hand, when the content of the surfactant is not more than any of the upper limits set forth above, it is possible to restrict the surfactant from becoming a foreign substance in production of the resin composition and to further improve transparency of an obtained optical element.

Note that the content of the surfactant of the strontium carbonate powder referred to in the present specification is measured by a thermogravimetric differential thermal analysis (hereinafter, also abbreviated as "TG-DTA") device, for example.

The method by which the strontium carbonate powder is produced may, for example, be a method described in JP2021-47402A.

### <Other compounding agents>

The presently disclosed resin composition may contain other commonly known compounding agents as necessary to the extent that the effects according to the present disclosure are not lost. Examples of such other commonly known compounding agents include glidants, mold release agents, dispersion aids, lubricants, antioxidants, heat stabilizers, light stabilizers, ultraviolet absorbers, infrared absorbers, antistatic agents, dispersants, chlorine scavengers, flame retardants, crystallization nucleating agents, antifogging agents, pigments, organic fillers, neutralizers, decomposers, metal deactivators, antifouling agents, antibacterial agents, and thermoplastic elastomers.

### <Physical properties of resin composition>

The melt flow rate (hereinafter, also abbreviated as "MFR") of the presently disclosed resin composition as measured in accordance with JIS K6719 with a temperature of 280°C and a load of 21.18 N is preferably 40 g/10 min or more, more preferably 45 g/10 min or more, and even more preferably 50 g/10 min or more, and is preferably 80 g/10 min or less, and more preferably 60 g/10 min or less.

By adopting a resin composition having an MFR that is not less than any of the lower limits set forth above, it is possible to further reduce birefringence of an obtained optical element and to suppress the occurrence of shaping defects such as weld lines. On the other hand, when the MFR is not more than any of the upper limits set forth above, formability of the resin composition can be improved.

The MFR of the resin composition can be adjusted through the MFR of the alicyclic structure-containing polymer, the proportional content of the alicyclic structure-containing polymer, and so forth.

### <Application of resin composition>

The presently disclosed resin composition suppresses the occurrence of shaping defects such as stringing while also being capable of forming an optical element having high transparency and low birefringence, and thus can particularly suitably be used for an optical element that is obtained by injection molding. In other words, the presently disclosed resin composition is particularly preferably a resin composition for an optical element. The aforementioned optical element may be an optical lens, a diffraction grating, a filter, a prism, or the like.

### (Production method and form of resin composition)

No specific limitations are placed on the method by which the presently disclosed resin composition is produced. For example, the presently disclosed resin composition can be produced by kneading the alicyclic structure-containing polymer and the strontium carbonate powder. The resin composition may be obtained in the form of resin pellets, for example. The kneading temperature is not specifically limited but may be 180°C or higher, preferably 190°C or higher, and more preferably 200°C or higher, for example, and may be 300°C or lower, preferably 290°C or lower, and more preferably 280°C or lower, for example.

The presently disclosed resin composition can be produced by mixing the strontium carbonate powder and compounding agents that are used as necessary in high concentration with the alicyclic structure-containing polymer, kneading these materials to obtain a masterbatch, subsequently mixing the masterbatch and the alicyclic structure-containing polymer in desired proportions, and then performing melt-kneading.

The concentration of the strontium carbonate powder and various compounding agents in the masterbatch is not specifically limited, but is preferably not less than 2 times and not more than 30 times the mass concentration in the final product, and more preferably not less than 4 times and not more than 25 times the mass concentration in the final product.

Mixing of the alicyclic structure-containing polymer, the strontium carbonate powder, and compounding agents that are used as necessary can be performed using a mixer such as a Henschel mixer, a V blender, a ribbon blender, a tumbler blender, or a conical blender, for example, without any specific limitations. After the mixing, the resin composition may be obtained through melt-kneading using a single-screw extruder, a twin-screw extruder, a kneader, or the like, but is not specifically limited to being obtained in this manner.

The shape of the resin composition is not specifically limited but is preferably a granulated, pulverized, or pellet-like shape in order to facilitate shaping of an optical element.

### (Optical element)

The presently disclosed optical element is obtained through shaping of the presently disclosed resin composition. The presently disclosed optical element has high transparency and low birefringence as a result of being obtained through shaping of the presently disclosed resin composition. Moreover, since the presently disclosed resin composition can suppress the occurrence of shaping defects such as stringing, the presently disclosed optical element is preferably an optical element obtained through injection molding of the resin composition. The optical element may be an optical lens, a diffraction grating, a filter, a prism, or the like, for example.

The melting temperature during shaping differs depending on the alicyclic structure-containing polymer and resin composition that are used, but is preferably 200°C or higher, more preferably 250°C or higher, and even more preferably 300°C or higher, and is preferably 400°C or lower, and more preferably 350°C or lower.

When the melting temperature during shaping is not lower than any of the lower limits set forth above, an optical element having even lower birefringence is obtained because residual stress of the optical element can be reduced. Moreover, the occurrence of shaping defects such as weld lines can be suppressed.

On the other hand, when the melting temperature during shaping is not higher than any of the upper limits set forth above, resin burning of the resin composition can be reduced, and an optical element having even better transparency is obtained. Moreover, the occurrence of shaping defects such as stringing can be further suppressed.

Note that in the case of injection molding in the present specification, the melting temperature during shaping refers to the temperature of the resin composition in a molten state.

In a case in which a mold is used, the mold temperature is preferably "Tg - 30°C" or higher (where Tg (units: °C) is the glass-transition temperature of the alicyclic structure-containing polymer), more preferably "Tg - 20°C" or higher, and even more preferably "Tg - 10°C" or higher, and is preferably "Tg + 15°C" or lower, more preferably "Tg + 10°C" or lower, and even more preferably "Tg + 5°C" or lower.

### EXAMPLES

The following provides a more detailed description of the present disclosure through examples and comparative examples. However, the present disclosure is not in any way limited by these examples.

In the following examples and comparative examples, various physical properties were measured according to the methods described below.

### <Weight-average molecular weight>

The weight-average molecular weight (Mw) of an alicyclic structure-containing polymer was determined as a standard polyisoprene-equivalent value through measurement by gel permeation chromatography (GPC) with cyclohexane as an eluent.

Standard polyisoprene produced by Tosoh Corporation (Mw = 602, 1,390, 3,920, 8,050, 13,800, 22,700, 58,800, 71,300, 109,000, 280,000) was used as the standard polyisoprene.

The measurement was performed under conditions of a flow rate of 1.0 mL/min, a sample injection volume of 100 µL, and a column temperature of 40°C using three columns (TSKgel G5000HXL, TSKgel G4000HXL, and TSKgel G2000HXL produced by Tosoh Corporation) connected in series.

### <Glass-transition temperature>

The glass-transition temperature (Tg) of an alicyclic structure-containing polymer was measured in accordance with JIS K7121 using a differential scanning calorimeter (DSC6220 produced by SII NanoTechnology Inc.) under a condition of a heating rate of 10°C/min.

### <Percentage hydrogenation (remaining percentage of carbon-carbon double bonds)>

The percentage hydrogenation of an alicyclic structure-containing polymer was determined by ¹H-NMR measurement.

### <Melt flow rate>

The melt flow rate (MFR) of a resin composition was measured in accordance with JIS K6719 under conditions of a temperature of 280°C and a load of 21.18 N (load of 2.16 kgf).

### <Haze>

Pellets of a resin composition containing an alicyclic structure-containing polymer were loaded into an injection molding machine (produced by FANUC Corporation; product name: ROBOSHOT S2000i100A) and were injection molded under conditions of a resin temperature of 270°C, a mold temperature of (Tg - 20)°C, and an injection pressure of 80 MPa to produce a resin plate of 65 mm (length) × 65 mm (width) × 3 mm (thickness).

Next, this resin plate was used as a test specimen, and haze was measured in a 3 mm thickness direction of the test specimen in accordance with a method of JIS K7105 using a turbidity meter (NDH 7000SPII produced by Nippon Denshoku Industries Co., Ltd.).

### <Stringing>

Pellets of a resin composition containing an alicyclic structure-containing polymer were loaded into an injection molding machine (produced by FANUC Corporation: product name: ROBOSHOT αS-50iA) and were injection molded using a mold under conditions of a resin temperature of 310°C, a mold temperature of (Tg - 5)°C, an injection pressure of 50 MPa, and a daylight opening of 150 mm to produce an optical lens (FIG. 1) having a convex surface radius of curvature of 5.73 mm, a concave surface radius of curvature of 3.01 mm, a size of 4.5 mm in diameter, a lens portion (optically effective surface) of 3 mm in diameter, and a lens portion central thickness of 0.20 mm. Note that in FIG. 1, A indicates a gate direction, and B indicates an opposite to gate direction.

The length of stringing that arose between a molding machine nozzle and a sprue portion upon removal of the lens from the mold was measured.

### <Weld line>

The surface of the lens obtained as described above was observed using an optical microscope (BX60 produced by Olympus Corporation), and the length of a weld line arising in the opposite to gate direction was measured.

### <Birefringence>

The birefringence of a central portion of the lens obtained as described above was measured using a resin molded lens inspection system (WPA-100 produced by Photonic Lattice Inc.). A value for birefringence was obtained as a value standardized for the measurement wavelength (543 nm). A smaller value indicates lower birefringence.

Products produced by the methods described below were used as alicyclic structure-containing polymers (A) to (D) and strontium carbonate powder in the following examples and comparative examples.

### (Production of alicyclic structure-containing polymer (A))

A polymerization reactor that had undergone drying and nitrogen purging was charged with 7 parts by mass (1 mass% relative to total amount of monomers used in polymerization) of a monomer mixture containing 70 mass% of methanotetrahydrofluorene (MTF), 23 mass% of tetracyclododecene (TCD), and 7 mass% of norbornene (NB), 1,600 parts by mass of dehydrated cyclohexane, 0.55 parts by mass of 1-hexene, 1.3 parts by mass of diisopropyl ether, 0.33 parts by mass of isobutyl alcohol, 0.84 parts by mass of triisobutylaluminum, and 30 parts by mass of a 0.66 mass% cyclohexane solution of tungsten hexachloride, and these materials were stirred at 55°C for 10 minutes.

Next, the reaction system was held at 55°C and was stirred while 693 parts by mass of the aforementioned monomer mixture and 72 parts by mass of a 0.77 mass% cyclohexane solution of tungsten hexachloride were each continuously added dropwise into the polymerization reactor over 150 minutes. The polymerization reactor was stirred for 30 minutes once the dropwise addition was complete, and then 1.0 parts by mass of isopropyl alcohol was added to end a ring-opening polymerization reaction. The conversion rate of monomers to polymer was determined to be 100% upon measurement of the polymerization reaction solution by gas chromatography.

Next, 300 parts by mass of the polymerization reaction solution containing the polymer was transferred to an autoclave equipped with a stirrer, and then 100 parts by mass of cyclohexane and 2.0 parts by mass of nickel catalyst supported on diatomaceous earth (T8400RL produced by Nikki Chemical Co., Ltd.; supported nickel content: 58 mass%) were added. The inside of the autoclave was purged with hydrogen, and a reaction was subsequently carried out at 180°C with a hydrogen pressure of 4.5 MPa for 6 hours.

Once the hydrogenation reaction had ended, the polymerization reaction solution present after the hydrogenation reaction had ended was subjected to pressurized filtration at a pressure of 0.25 MPa using a pressurized filter (FUNDA Filter produced by IHI Corporation) with diatomaceous earth (Radiolite^{®} #500 (Radiolite is a registered trademark in Japan, other countries, or both) produced by Showa Chemical Industry Co., Ltd.) as a filter bed to obtain a colorless transparent solution.

Next, 0.25 parts by mass of pentaerythritol tetrakis[3-(3,5-di-t-butyl-4-hydroxyphenyl)propionate] (Irganox^{®} 1010 (Irganox is a registered trademark in Japan, other countries, or both) produced by Ciba Specialty Chemicals) as an antioxidant was added and dissolved in the obtained solution per 100 parts by mass of the hydrogenated product.

This solution was filtered using a filter (Zeta Plus^{®} 30H (Zeta Plus is a registered trademark in Japan, other countries, or both) produced by CUNO Inc.; pore diameter: 0.5 µm to 1 µm), and the filtrate was then filtered using a metal fiber filter (produced by Nichidai Corporation; pore diameter: 0.4 µm) so as to remove foreign substances.

Next, cyclohexane serving as a solvent and other volatile components were removed from the filtrate (solution) obtained as described above at a temperature of 260°C and a pressure of 1 kPa or lower using a cylindrical evaporator (produced by Hitachi, Ltd.). The remaining product was extruded as strands in a molten state from a die directly connected to the evaporator, was water cooled, and was subsequently cut by a pelletizer (OSP-2 produced by Osada Seisakusho) to yield pellets of an alicyclic structure-containing polymer (A).

The alicyclic structure-containing polymer (A) had an Mw of 25,000, Mw/Mn of 1.6, percentage hydrogenation of 99.9%, and Tg of 141°C. Mn refers to number-average molecular weight.

### (Production of alicyclic structure-containing polymer (B))

An alicyclic structure-containing polymer (B) was produced in the same way as in the production method of the alicyclic structure-containing polymer (A) with the exception that the used amount of 1-hexene was set as 0.5 parts by mass.

The alicyclic structure-containing polymer (B) had an Mw of 26,500, Mw/Mn of 1.7, percentage hydrogenation of 99.9%, and Tg of 142°C.

### (Production of alicyclic structure-containing polymer (C))

Norbornene, a hydrocarbon solvent (polymerization solvent), ethylene, and hydrogen were supplied into a continuous polymerization device with a norbornene supply rate of 52 kg/h, a polymerization solvent supply rate of 23 kg/h, an ethylene supply rate of 4.0 kg/h, and a hydrogen supply rate of 0.67 g/h. Concurrently therewith, a catalyst system comprising diphenylmethylidene-cyclopentadienyl fluorenyl zirconium dichloride as a catalyst (polymerization catalyst) and methylalumoxane (10 mass% toluene solution) as a cocatalyst was supplied into the continuous polymerization device. The temperature of the continuous polymerization device was maintained at 70°C so as to yield an addition polymer. In a stirring tank of a next step, 0.2 mass% of pentaerythritol tetrakis[3-(3,5-di-t-butyl-4-hydroxyphenyl)propionate] (Irganox^{®} 1010 produced by Ciba Specialty Chemicals) as an antioxidant was added to this addition polymer, and then solvent was removed at high temperature and reduced pressure in a subsequent desolvation step. The copolymer was extruded as strands in a molten state and was cut by a pelletizer (OSP-2 produced by Osada Seisakusho) to yield pellets of an alicyclic structure-containing polymer (C).

The alicyclic structure-containing polymer (C) had a Tg of 137°C.

### (Production of alicyclic structure-containing polymer (D))

Norbornene, a hydrocarbon solvent (polymerization solvent), ethylene, and hydrogen were supplied into a continuous polymerization device with a norbornene supply rate of 36 kg/h, a polymerization solvent supply rate of 22 kg/h, an ethylene supply rate of 3.0 kg/h, and a hydrogen supply rate of 0.45 g/h. Concurrently therewith, a catalyst system comprising diphenylmethylidene-cyclopentadienyl indenyl zirconium dichloride as a catalyst (polymerization catalyst) and methylalumoxane (10 mass% toluene solution) as a cocatalyst was supplied into the continuous polymerization device. The temperature of the continuous polymerization device was maintained at 70°C so as to yield an addition polymer. In a stirring tank of a next step, 0.2 mass% of pentaerythritol tetrakis[3-(3,5-di-t-butyl-4-hydroxyphenyl)propionate] (Irganox^{®} 1010 produced by Ciba Specialty Chemicals) as an antioxidant was added to this addition polymer, and then solvent was removed at high temperature and reduced pressure in a subsequent desolvation step. The copolymer was extruded as strands in a molten state and was cut by a pelletizer (OSP-2 produced by Osada Seisakusho) to yield pellets of an alicyclic structure-containing polymer (D).

The alicyclic structure-containing polymer (D) had a Tg of 139°C.

### (Production of strontium carbonate powder)

### <Reaction step>

A strontium hydroxide aqueous suspension of 5.6 mass% in concentration was produced by adding 366 g of strontium hydroxide octahydrate (special grade reagent; purity: 96 mass% or higher) to 3 L of pure water having a water temperature of 10°C and performing mixing thereof. DL-Tartaric acid (special grade reagent; purity: 99% or higher) was added to and stirred with this strontium hydroxide aqueous suspension so as to cause dissolution in the aqueous suspension. Next, the liquid temperature of the strontium hydroxide aqueous suspension was maintained at 10°C and stirring was continued while blowing carbon dioxide gas into the aqueous suspension at a flow rate of 0.5 L/min (flow rate of 3 mL/min relative to 1 g of strontium hydroxide) until the aqueous suspension reached a pH of 7 to produce strontium carbonate. Stirring was subsequently continued for a further 30 minutes to yield an aqueous suspension of strontium carbonate.

### <Maturation step>

The obtained aqueous suspension of strontium carbonate was loaded into a stainless steel tank and was heat treated at a temperature of 80°C for 24 hours to cause growth of strontium carbonate in an acicular form. The product was subsequently left to cool to room temperature, thereby producing an aqueous slurry of strontium carbonate nanoparticles.

### <Surface treatment step and drying step>

A Homo Mixer (T.K. Homo Mixer Mark II produced by PRIMIX Corporation) was charged with 3,500 g of the aqueous slurry (concentration: 5.8 mass%) of strontium carbonate nanoparticles. An impeller of the Homo Mixer was rotated with a circumferential speed of 7.85 m/s so as to perform stirring while adding and dissolving 56.8 g (28 parts by mass relative to 100 parts by mass of strontium carbonate nanoparticles) of a polyoxyethylene styrenated phenyl ether phosphoric acid ester in the aqueous slurry. Thereafter, stirring and mixing were continued for 1 hour. The aqueous slurry present after stirring and mixing was dried to yield strontium carbonate powder that had undergone surface treatment. As a result of observation of the obtained strontium carbonate powder using an electron microscope, the strontium carbonate powder was confirmed to be an acicular powder (average major axis: 60 nm).

### (Example 1)

A mixture was obtained by mixing 0.2 parts by mass of the strontium carbonate powder with 99.8 parts by mass of the pellets of the alicyclic structure-containing polymer (A). This mixture was kneaded at a resin temperature of 245°C and a screw speed of 180 rpm using a twin-screw extruder (produced by Toshiba Machine Co., Ltd.; product name: TEM35B), was extruded as strands, was water cooled, and was subsequently cut by a pelletizer to produce resin composition pellets of 4 mm in length.

The resin composition pellets were used to perform various measurements. The results are shown in Table 1.

### (Example 2)

Resin composition pellets were produced and various measurements were performed in the same way as in Example 1 with the exception that 0.5 parts by mass of the strontium carbonate powder was mixed with 99.5 parts by mass of the pellets of the alicyclic structure-containing polymer (A). The results are shown in Table 1.

### (Example 3)

Resin composition pellets were produced and various measurements were performed in the same way as in Example 1 with the exception that 0.75 parts by mass of the strontium carbonate powder was mixed with 99.25 parts by mass of the pellets of the alicyclic structure-containing polymer (A). The results are shown in Table 1.

### (Example 4)

Resin composition pellets were produced and various measurements were performed in the same way as in Example 1 with the exception that 1 part by mass of the strontium carbonate powder was mixed with 99 parts by mass of the pellets of the alicyclic structure-containing polymer (A). The results are shown in Table 1.

### (Example 5)

Resin composition pellets were produced and various measurements were performed in the same way as in Example 1 with the exception that the alicyclic structure-containing polymer (B) was used instead of the alicyclic structure-containing polymer (A) and that 0.5 parts by mass of the strontium carbonate powder was mixed with 99.5 parts by mass of the pellets of the alicyclic structure-containing polymer (B). The results are shown in Table 1.

### (Comparative Example 1)

Various evaluations were performed in the same way as in Example 1 with the exception that strontium carbonate powder was not mixed with the pellets of the alicyclic structure-containing polymer (A). The results are shown in Table 1.

### (Comparative Example 2)

Resin composition pellets were produced and various measurements were performed in the same way as in Example 1 with the exception that 0.1 parts by mass of the strontium carbonate powder was mixed with 99.9 parts by mass of the pellets of the alicyclic structure-containing polymer (A). The results are shown in Table 1.

### (Comparative Example 3)

Resin composition pellets were produced and various measurements were performed in the same way as in Example 1 with the exception that 1.5 parts by mass of the strontium carbonate powder was mixed with 98.5 parts by mass of the pellets of the alicyclic structure-containing polymer (A). The results are shown in Table 1.

### (Example 6)

A mixture was obtained by mixing 0.2 parts by mass of the strontium carbonate powder with 99.8 parts by mass of the pellets of the alicyclic structure-containing polymer (C). This mixture was kneaded at a resin temperature of 240°C and a screw speed of 160 rpm using a twin-screw extruder (produced by Toshiba Machine Co., Ltd.; product name: TEM35B), was extruded as strands, was water cooled, and was subsequently cut by a pelletizer to produce resin composition pellets of 4 mm in length.

The resin composition pellets were used to perform various measurements. The results are shown in Table 2.

### (Example 7)

Resin composition pellets were produced and various measurements were performed in the same way as in Example 6 with the exception that 0.5 parts by mass of the strontium carbonate powder was mixed with 99.5 parts by mass of the pellets of the alicyclic structure-containing polymer (C). The results are shown in Table 2.

### (Example 8)

Resin composition pellets were produced and various measurements were performed in the same way as in Example 6 with the exception that 0.75 parts by mass of the strontium carbonate powder was mixed with 99.25 parts by mass of the pellets of the alicyclic structure-containing polymer (C). The results are shown in Table 2.

### (Example 9)

Resin composition pellets were produced and various measurements were performed in the same way as in Example 6 with the exception that 1 part by mass of the strontium carbonate powder was mixed with 99 parts by mass of the pellets of the alicyclic structure-containing polymer (C). The results are shown in Table 2.

### (Example 10)

A mixture was obtained by mixing 0.5 parts by mass of the strontium carbonate powder with 99.5 parts by mass of the pellets of the alicyclic structure-containing polymer (D). This mixture was kneaded at a resin temperature of 245°C and a screw speed of 160 rpm using a twin-screw extruder (produced by Toshiba Machine Co., Ltd.; product name: TEM35B), was extruded as strands, was water cooled, and was subsequently cut by a pelletizer to produce resin composition pellets of 4 mm in length.

The resin composition pellets were used to perform various measurements. The results are shown in Table 2.

### (Comparative Example 4)

Various evaluations were performed in the same way as in Example 6 with the exception that strontium carbonate powder was not mixed with the pellets of the alicyclic structure-containing polymer (C). The results are shown in Table 2.

### (Comparative Example 5)

Resin composition pellets were produced and various measurements were performed in the same way as in Example 6 with the exception that 0.1 parts by mass of the strontium carbonate powder was mixed with 99.9 parts by mass of the pellets of the alicyclic structure-containing polymer (C). The results are shown in Table 2.

### (Comparative Example 6)

Resin composition pellets were produced and various measurements were performed in the same way as in Example 6 with the exception that 1.5 parts by mass of the strontium carbonate powder was mixed with 98.5 parts by mass of the pellets of the alicyclic structure-containing polymer (C). The results are shown in Table 2.

**[Table 1]**

| | | | Example 1 | Example 2 | Example 3 | Example 4 | Example 5 | Comparative Example 1 | Comparative Example 2 | Comparative Example 3 |
|---|---|---|---|---|---|---|---|---|---|---|
| Resin composition | Chemical composition | Alicyclic structure-containing polymer (A) [mass%] | 99.8 | 99.5 | 99.25 | 99 | - | 100 | 99.9 | 98.5 |
| | | Alicyclic structure-containing polymer (B) [mass%] | - | - | - | - | 99.5 | - | - | - |
| | | Strontium carbonate powder [mass%] | 0.2 | 0.5 | 0.75 | 1 | 0.5 | 0 | 0.1 | 1.5 |
| | Physical properties | MFR [g/10 min] | 50 | 50 | 50 | 50 | 42 | 50 | 50 | 50 |
| Results | | Birefringence [-] | 14 | 8 | 12 | 18 | 15 | 24 | 21 | 32 |
| | | Haze [%] | 0.7 | 1.2 | 1.7 | 2.1 | 1.3 | 0.2 | 0.4 | 4.5 |
| | | Stringing [mm] | 0 | 0 | 0 | 0 | 0 | 15 | 10 | 0 |
| | | Weld [mm] | 0 | 0.1 | 0.1 | 0.1 | 0.2 | 0 | 0 | 0.2 |

**[Table 2]**

| | | | Example 6 | Example 7 | Example 8 | Example 9 | Example 10 | Comparative Example 4 | Comparative Example 5 | Comparative Example 6 |
|---|---|---|---|---|---|---|---|---|---|---|
| Resin composition | Chemical composition | Alicyclic structure-containing polymer (C) [mass%] | 99.8 | 99.5 | 99.25 | 99 | - | 100 | 99.9 | 98.5 |
| | | Alicyclic structure-containing polymer (D) [mass%] | - | - | - | - | 99.5 | - | - | - |
| | | Strontium carbonate powder [mass%] | 0.2 | 0.5 | 0.75 | 1 | 0.5 | 0 | 0.1 | 1.5 |
| | Physical properties | MFR [g/10 min] | 85 | 85 | 85 | 85 | 48 | 85 | 85 | 85 |
| Results | | Birefringence [-] | 20 | 14 | 17 | 23 | 22 | 36 | 30 | 45 |
| | | Haze [%] | 1.2 | 1.8 | 2.6 | 3.6 | 2.4 | 0.4 | 0.8 | 8.5 |
| | | Stringing [mm] | 0 | 0 | 0 | 0 | 0 | 3 | 0 | 0 |
| | | Weld [mm] | 0.5 | 0.5 | 0.5 | 0.5 | 0.6 | 0.5 | 0.5 | 0.6 |

It can be seen from Table 1 and Table 2 that Examples 1 to 10 are resin compositions that suppress the occurrence of stringing while also being capable of forming an optical element having high transparency and low birefringence.

### INDUSTRIAL APPLICABILITY

According to the present disclosure, it is possible to provide a resin composition that suppresses the occurrence of shaping defects such as stringing while also being capable of forming an optical element having high transparency and low birefringence and an optical element that is obtained through shaping of this resin composition.

### REFERENCE SIGNS LIST

- A: gate direction
- B: opposite to gate direction

## Claims

1. A resin composition comprising an alicyclic structure-containing polymer and strontium carbonate powder, wherein
proportional content of the strontium carbonate powder in the resin composition is not less than 0.2 mass% and not more than 1.0 mass%.

2. The resin composition according to claim 1, wherein the strontium carbonate powder contains strontium carbonate nanoparticles and a surfactant attached to surfaces of the strontium carbonate nanoparticles.

3. The resin composition according to claim 1 or 2, having a melt flow rate of 40 g/10 min or more as measured in accordance with JIS K6719 with a temperature of 280°C and a load of 21.18 N.

4. The resin composition according to claim 1 or 2, wherein the strontium carbonate powder has an aspect ratio of 1.1 or more.

5. The resin composition according to claim 1 or 2, wherein the strontium carbonate powder has an average diameter of not less than 10 nm and not more than 100 nm.

6. An optical element obtained through shaping of the resin composition according to claim 1 or 2.
